Europäisches Patentamt

**European Patent Office**

**Office européen des brevets**

(11) Veröffentlichungsnummer: **0 209 833**
**B1**

(12) **EUROPÄISCHE PATENTSCHRIFT**

(45) Veröffentlichungstag der Patentschrift:
**10.01.90**

(21) Anmeldenummer: **86109685.7**

(22) Anmeldetag: **15.07.86**

(51) Int. Cl.⁴: **E 04 H 6/02**

(54) **Transportable Raumzelle.**

(30) Priorität: **20.07.85 DE 8520976 U**

(43) Veröffentlichungstag der Anmeldung:
**28.01.87 Patentblatt 87/5**

(45) Bekanntmachung des Hinweises auf die Patenterteilung:
**10.01.90 Patentblatt 90/2**

(84) Benannte Vertragsstaaten:
**AT BE CH DE FR IT LI NL**

(56) Entgegenhaltungen:
**AU-B- 513 830**
**DE-A- 3 103 877**
**DE-A- 3 126 828**
**DE-A- 3 309 417**
**US-A- 4 321 962**

(73) Patentinhaber: **Betonbau GmbH, Schwetzinger Strasse 22-26, D-6833 Waghäusel (DE)**

(72) Erfinder: **Primus, Illo-Frank, Dr.-Ing. Dipl.-Ing., Im Rennich 10, D-7500 Karlsruhe 41 (DE)**

(74) Vertreter: **Hiebsch, Gerhard F., Dipl.-Ing., Hiebsch & Peege Patentanwälte Postfach464 Erzbergerstrasse 5a, D-7700 Singen 1 (DE)**

## Beschreibung

Die Erfindung betrifft eine transportable Raumzelle aus Beton-Fertigteilen, insbesondere Garage aus einer vorgefertigten Beton-Raumzelle mit vier Außenwänden, einer Bodenplatte und einer vorzugsweise separat aufsetzbaren Dachplatte, wobei die Außenwände der Raumzelle als Wärmeenergieabsorber wirkende Rohre für eine Energieträgerflüssigkeit aufweisen.

Massiv-Absorbersysteme in Außenwände von Hochbauten zur Wärmeenergiegewinnung sind bekannt und haben sich als ein wirtschaftlicher Weg zur Gewinnung von Heizenergie bewährt; sie sammeln, speichern und spenden die Wärme und werden überwiegend zur Unterstützung konventioneller Heizsysteme eingesetzt, deren Kosten so zu mehr als 50% gesenkt zu werden vermögen. Auch sind solche Massiv-Absorbersysteme umweltfreundlich, da sie keine Abgasemission verursachen.

Die DE-A-3 103 877 offenbart eine Raumzelle der eingangs beschriebenen Art, deren Außenwände — wie auch Dächer von Garagen — mit derartigen Absorbersystemen ausgerüstet sind und mit auf der auf diese Weise gesammelter Wärmeenergie benachbarte Häuser beheizen. Die Außenwände und das Dach eignen sich aber nicht für die Speicherung der gesammelten Wärmeenergie, da im Tagesmittel die Wärmeabstrahlung dieser Flächen genauso groß ist wie die Wärmeeinstrahlung. Ohne eine zwischenzeitliche Wärmespeicherung läßt sich aber eine derartige Beheizung von Gebäuden — zumindest im monovalenten Betrieb — nicht wirtschaftlich durchführen.

Ein Nachteil der bisher bekannten Energiegaragen liegt ferner darin, daß sie nur relativ kleine Gebäude, etwa bis 120 m² Nutzfläche, beheizen können, und dies auch nur, wenn die Garage an allen Seiten völlig frei steht.

Der vorliegenden Erfindung liegt deshalb die Aufgabe zugrunde, eine transportable Raumzelle oder Garage der eingangs beschriebenen Art so auszugestalten, daß sie auch an ein vorhandenes Gebäude angebaut werden kann, für Überbrückungszeiten einen Massiv-Speicher zur Verfügung stellt, so daß dieser sich in dem zu beheizenden Gebäude erübrigt, und daß durch ergänzende Absorber und Zusatzheizungen, wie elektrischer Speicherheizung, in Zeiten des jeweils wirtschaftlichen Energieangebotes die aus der Umgebung oder aus dem Nachtspeicherheizbetrieb aufgenommene Wärmeenergie in wirtschaftlicher Weise gesammelt und über einen gewissen Zeitraum gespeichert wird, ohne daß dadurch Abstriche an dem eigentlichen Verwendungszweck der Raumzelle bzw. der Garage gemacht werden müßten.

Diese Aufgabe wird erfindungsgemäß dadurch gelöst, daß die ins Erdreich eingesetzte Bodenplatte und mindestens eine der Außenwände der Raumzelle auch unterirdisch Absorberrohre für die Energieträgerflüssigkeit aufweisen, daß als Nutzfläche bzw. als Stellfläche für das zu parkende Fahrzeug eine Zwischenbodenplatte in die Raumzelle eingezogen ist und daß der Raum zwischen der Bodenplatte und der Zwischenbodenplatte vorzugsweise als Wärmespeicher und/oder als Wärmeaustauscher nutzbar ist. Zudem sollen nach einem weiteren Merkmal der Erfindung elektrische Direktheizungs-Einrichtungen in oder auf den Beton-Fertigteilen, vorzugsweise in oder auf der Bodenplatte, angeordnet sein und vorzugsweise mit Nachtstrom betrieben werden, wobei die Bodenplatte im Inneren der Raumzelle mit einer Wärmeisolierung versehen ist.

Die im Erdreich liegende Bodenplatte der Raumzelle bzw. der Garage dient also zur Überbrückung bei ungünstigem Absorber-Energieangebot durch Aufnahme von Wärme aus dem Erdbereich. Sie kann ferner zur Speicherung der in den Außenwänden gesammelten Wärmeenergie dienen. Erfindungsgemäß ist zudem für das zu parkende Fahrzeug eine zusätzliche Zwischenbodenplatte als Stellfläche in die Garage bzw. als Nutzfläche in die Raumzelle eingezogen mit dem zusätzlichen Vorteil, daß der Raum zwischen der Bodenplatte der Garage und der Zwischenbodenplatte für die Zwecke des Absorber-Heizsystems benutzt werden kann.

Zweckmässige Vorschläge hierfür, die sich auch auf die Einteilung der Absorberkreisläufe in der Raumzelle beziehen, sind in den Unteransprüchen angegeben.

Neben der Speicherung in dem Zwischenraum und der Möglichkeit des bivalenten Einsatzes mit Hilfe von Nachtstrom-Speicherheizungen, die auf die Speicher im Zwischenraum arbeiten, bietet die erfindungsgemäße Raumzelle ferner gegenüber bekannten Lösungen den Vorteil, daß sie an ein bestehendes Gebäude angebaut werden kann oder dass sie in den Hang eingebaut werden kann und trotzdem mit ihren Elementen ausreichende Absorberflächen zur Verfügung stellt, so daß Wohnhäuser bis zu 200 m² Wohnfläche ohne im Haus benötigten Massiv-Speicher je nach Zweckmässigkeit monovalent oder bivalent beheizt werden können.

Es bietet sich sogar hier erstmalig die Möglichkeit einer trivalenten Heizung an, indem die im Haus befindliche Wärmepumpe als bivalente Wärmepumpe ausgeführt ist, und zwar in Form einer Kombieinheit mit einem Ölkessel und Ölbrenner und mit einem kleinen Vorratstank bis 500 l.

Die Erfindung wird nachfolgend anhand von zehn in der Zeichnung dargestellten Ausführungsbeispielen bechrieben und erläutert, die jeweils einen Querschnitt durch eine Raumzelle bzw. Garage mit zum Teil unterschiedlichen Absorberkreisläufen und weiteren Zusatzeinrichtungen für den Heizkreislauf zeigen.

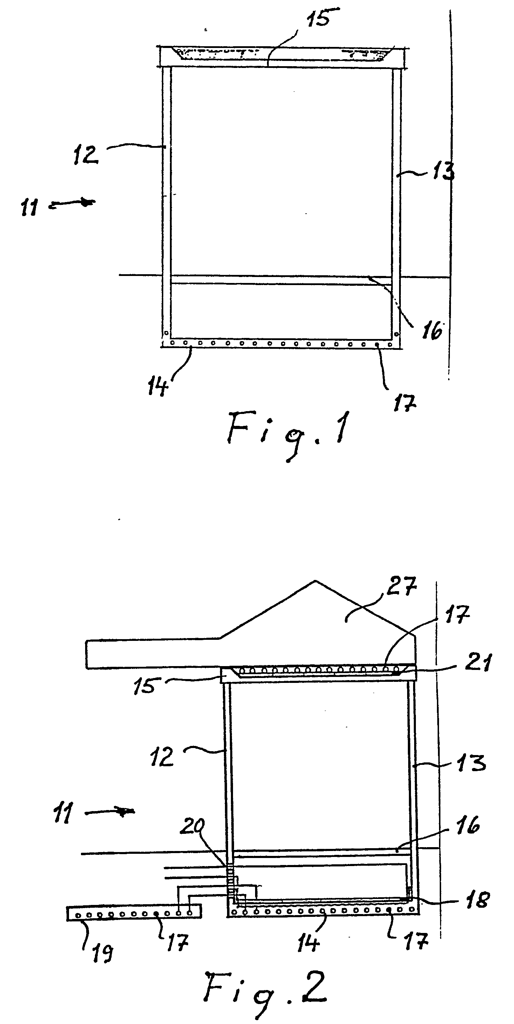

Die Garage 11 gemäß Figur 1 besteht aus einer vorgefertigten Betonraumzelle mit zwei Seitenwänden 12 und 13, einer Rückwand und einer anbetonierten Bodenplatte 14, auf die eine Dachplatte 15 aufgesetzt ist. Als Stellfläche für das in der Garage zu parkende Fahrzeug ist in Höhe des umgebenden Erdniveaus eine Zwischenbodenplatte 16 eingezogen. Die Bodenplatte 14 ist mit Kunststoffrohren 17 für eine Energieabsorberflüssigkeit durchzogen. Sämtliche Kunststoffrohre 17 bilden einen gemeinsamen Kreislauf für die Energieabsorberflüssigkeit, den sogenannten Massiv-Absorberkreis, der über eine in der Zeichnung nicht dargestellte Wärmepumpe an das mit Wärmeenergie zu versorgende Heizsystem angeschlossen ist. Die Energieabsorberflüssigkeit in
2

den Rohren 17 nimmt Wärme aus dem die Bodenplatte 14 umgebenden Erdreich auf und kann die Wärme in Zeiten, in denen sie nicht zu Heizzwecken benötigt wird, speichern.

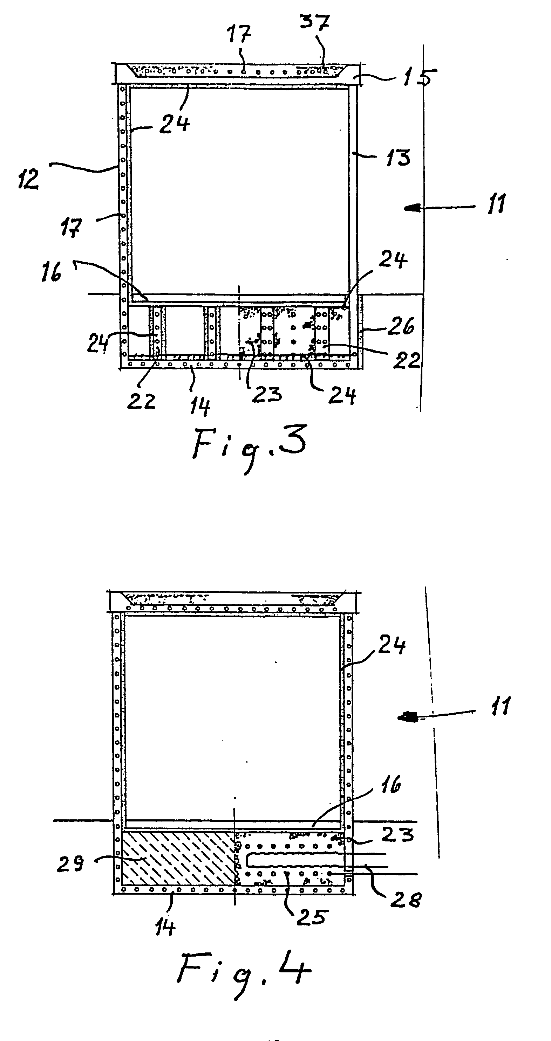

Bei dem Ausführungsbeispiel gemäß Figur 2 ist die Bodenplatte 14 massiver als die Seitenwände 12 und 13 ausgeführt, etwa in einer Stärke von 20 cm, während die Seitenwände etwa 10 cm stark sind. Die Bodenplatte 14 enthält neben den Rohren 17 für die Energieträgerflüssigkeit eine eingebettete elektrische Direktheizung 18, die mit billigem Nachtstrom betrieben wird, um die als Wärmespeicher dienende Bodenplatte zusätzlich aufzuheizen. Die Bodenplatte 14 wird durch eine außerhalb der Raumzelle 11 etwa in gleicher Höhe wie die Bodenplatte im Erdreich angeordnete Erdspeicherplatte 19 ergänzt, deren Rohrleitungen 17 als direkte Verlängerungen der Rohrleitungen in der Bodenplatte über Durchführungen 20 im unterirdischen Bereich der Seitenwand 12 ins Innere der Raumzelle 11 geführt sind.

Die Außenwände 12 und 13 bilden mit der Bodenplatte 14 einen monolithischen Baukörper, wobei das untere, ins Erdreich ragende Teilstück der Außenwände mit einer in der Zeichnung nicht dargestellten verstärkten Armierungsbewehrung ausgeführt ist, die durchgehend in die Bodenplatte geführt ist.

Auf dem Dach 15 der Raumzelle 11 sind Beton-Absorberelemente 27 angeordnet, die nach der Art einer Pergola über den Grundriß der Raumzelle 11 hinausragen. Sie sind an beiden Außenflächen mit Absorberrohren 17 versehen, die mit den übrigen Rohrleitungen 17 energetisch in Verbindung stehen. Auf der Dachplatte 15 ist ein weiterer Absorberkreis aus Rohrleitungen 17 gebildet, die durch eine Wärmeisolationsschicht 21 von der Dachplatte isoliert sind.

Bei dem Ausführungsbeispiel gemäß Figur 3 weist auch die Seitenwand 12 Rohrleitungen 17 auf, während die Seitenwand 13 direkt an ein durch die Massiv-Absorberkreise der Raumzelle 11 zu beheizendes Gebäude angrenzt und deshalb keine Rohrleitungen enthält. Der Raum zwischen der Bodenplatte 14 und der Zwischenbodenplatte 16 ist in diesem Ausführungsbeispiel als Wärmespeicher und Wärmeaustauscher ausgenutzt. Zu diesem Zweck enthält er Betonfertigteile 22, die mit von Energieträgerflüssigkeit durchströmten Rohren 17 durchzogen sind. Die Betonfertigteile 22 sind entweder durch Erdreich 23, Beton, Kies oder andere wärmeleitende und wärmespeichernde Materialien oder durch eine Isolierschicht 24 wärmeisoliert. Die Isolierschicht 24 erstreckt sich auch über die Innenseite der Bodenplatte 14, die Unterseite der Zwischenbodenplatte 16 und der Dachplatte 15 sowie die Innenseite der mit Rohren 17 belegten Außenwand 12. Das Erdreich 23 zwischen den beiden Platten 14 und 16 ist zusätzlich mit Rohren oder Leitungen 25 zum Wärmetransport, zur Wärmeeinbringung und zum Wärmeaustausch durchzogen. Die Betonfertigteile 22 enthalten neben den von Energieträgerflüssigkeit durchströmten Rohren 17 Kupferdrähte, die an mit Nachtstrom betriebene elektrische Direktheizungseinrichtungen, Abwärmeleitungen oder andere Energiespender angeschlossen sind und Energie in die Betonfertigteile hineintransportieren, wo diese gespeichert wird.

Das verschafft die Möglichkeit, daß die Betonfertigteile 22 in lastarmen oder umweltenergiearmen Zeiten unmittelbar aufheizbar sind. Zweckmäßigerweise können auch elektrische Speicherheizungen auf Keramik- oder Schamottebasis in den Raum zwischen den Platten 14 und 16 eingebracht werden. Die Betonfertigteile 22 stehen in Wärmeaustausch mit einer in der Zeichnung nicht dargestellten Wärmepumpe oder der Wärmenutzungsseite der Heizanlage des zu beheizenden Gebäudes.

Beim direkten Anbau der Raumzelle 11 an ein Gebäude ist die an das Gebäude angrenzende Seitenwand 13 von der Bodenplatte 14 bis zur Höhe der Zwischenbodenplatte 16 gebäudeseitig mit einer Wärmeisolierung 26 versehen. Die Dachplatte 15 weist in diesem Ausführungsbeispiel eine Kiesauflage 27 auf, in der die Rohre 17 verlegt sind.

Das Ausführungsbeispiel gemäß Figur 4 zeigt eine frei aufgestellte Raumzelle 11. Deshalb enthalten auch beide Seitenwände 12 und 13 von Energieträgerflüssigkeit durchströmte Rohre 17 und auch die Innenseite der Seitenwand 13 ist mit einer Wärmeisolierung 24 versehen. Bei diesem Ausführungsbeispiel ist ein Teil des Raumes zwischen der Bodenplatte 14 und der Zwischenbodenplatte 16 — wie im vorhergehenden Ausführungsbeispiel — mit Erdreich 23 als Wärmespeicher gefüllt, das von Rohrleitungen 17 und Kupferdrähten 28 durchzogen ist. Der andere Teil des Raumes ist mit Beton 29 ausgefüllt, der in gleicher Weise wie das Erdreich 23 von Rohren und Leitungen zum Wärmetransport, zur Wärmeeinbringung und zum Wärmeaustausch durchzogen ist.

Figur 5 zeigt einen Längsschnitt durch eine als Garage dienende Raumzelle. Die Zwischenbodenplatte 16 weist hier zum Zwecke der Leitungsführung und zur Wartung und Auswechslung der im Raum zwischen der Zwischenbodenplatte und der Bodenplatte 14 angeordneten Speicher und Wärmeaustauscher 30, der zum Transport der Energieträgerflüssigkeiten erforderlichen Umwälzpumpen 31 sowie der Verteiler, an denen die Speicher und Absorber zusammengeführt sind, einer Wärmepumpe und zugehörigen Steuerungs- und Regelungsinstrumenten 32 Durchbrüche 33 auf.

Die Zwischenbodenplatte 16 besteht zweckmässigerweise aus mehreren Teilstücken. Wird die Raumzelle als Doppelparker-Garage mit eingebauter zweiter Parkbühne benutzt, so wird die Zwischenbodenplatte 16 in bekannter Weise geneigt eingebaut. Um den für die Steuerungs- und Regelungsgeräte 32 benötigten Platz und die Zugänglichkeit für diese Geräte zu schaffen, ist die Zwischenbodenplatte 16 an ihrem Endstück gekürzt.

Parallel zu einer der Außenwände der Garage und isoliert zu dieser ist an der Außenseite der Außenwand eine L-förmige Absorberplatte 34 angestellt, deren kurzer Schenkel 35 etwa in Verlängerung der Bodenplatte 14 im die Raumzelle umgebenden Erdreich verläuft. Die gesamte Absorberplatte 34, 35 ist mit von Energieträgerflüssigkeit durchströmten Rohren 17 durchzogen, die mit den übrigen Rohren 17 der Garage energetisch verbunden sind.

Das Dach 15 weist auch in diesem Ausführungsbeispiel Beton-Absorberelemente 27 auf, die während des Transportes der Fertiggarage waagerecht auf die Dachplatte 15 aufgelegt werden können, so daß die zulässige Gesamttransporthöhe nicht überschritten wird. Es ist auch möglich, die Beton-Absorberelemente 27 derart an der Dachplatte 15 zu befestigen, daß die Dachplatte während des Transportes um 180° um ihre Längsachse gedreht werden kann, so daß die Beton-Absorberelemente in das Innere der Garage weisen und somit die zulässige Gesamttransporthöhe ebenfalls nicht überschritten wird.

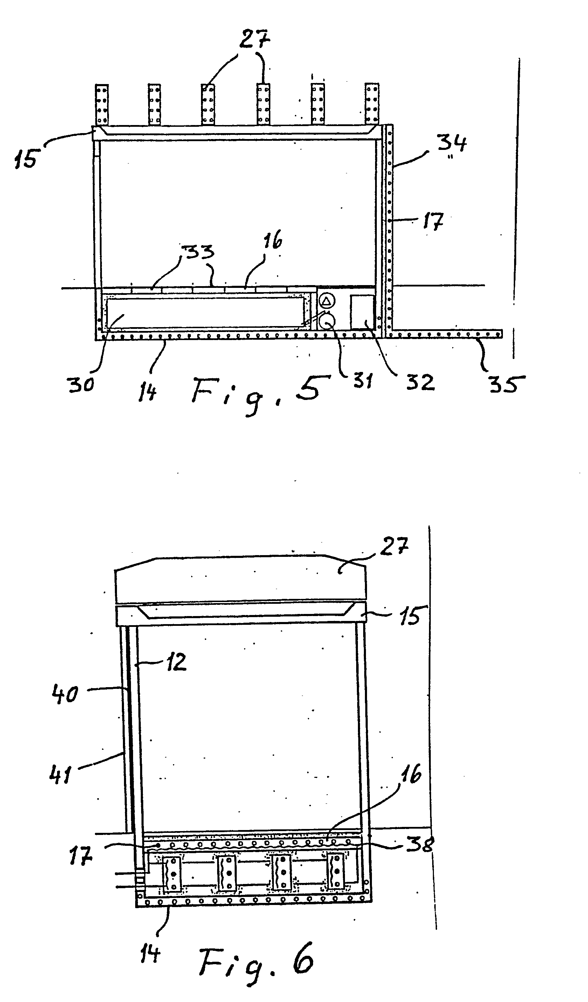

Bei dem Ausführungsbeispiel gemäß Figur 6 ist die Zwischenbodenplatte 16 als Sandwichplatte ausgebildet, wobei das unten liegende Fertigteilstück der Sandwichplatte als Energiespeicher oder als Wärmeaustauscher mit Rohren 17, durch die die Energieträgerflüssigkeit strömt, und mit durch Nachtstrom betriebenen elektrischen Heizdrähten durchzogen ist. Der Raum zwischen der Bodenplatte 14 und der Zwischenbodenplatte 16 ist auch in diesem Ausführungsbeispiel als Flüssigkeits-, Beton-, Keramik-, Schamotte- oder Hybridspeicher und Wärmeaustauscher ausgebildet.

Die auch in diesem Ausführungsbeispiel freistehende, nicht an ein Gebäude angrenzende Seitenwand 12 ist an ihrer Außenseite mit einem dunklen Anstrich 40 versehen. In einigen Zentimeter Abstand zu dieser Wand ist eine transparente Wand 41 installiert, so daß sich im Gesamtsystem eine sogenannte Trombe-Wand ergibt. Durch diese Trombe-Wand kann die eingestrahlte Wärme über den Beton der Seitenwand 12 und die in diese Seitenwand eingebrachten Bewehrungen in die Bodenplatte 14 geleitet und dort gespeichert werden. Auf der Dachplatte 15 sind auch hier — wie im Ausführungsbeispiel gemäß Figur 2 — Beton-Absorberelemente 27 gelagert, deren Rohrnetz mit den übrigen Rohren 17 energetisch in Verbindung steht.

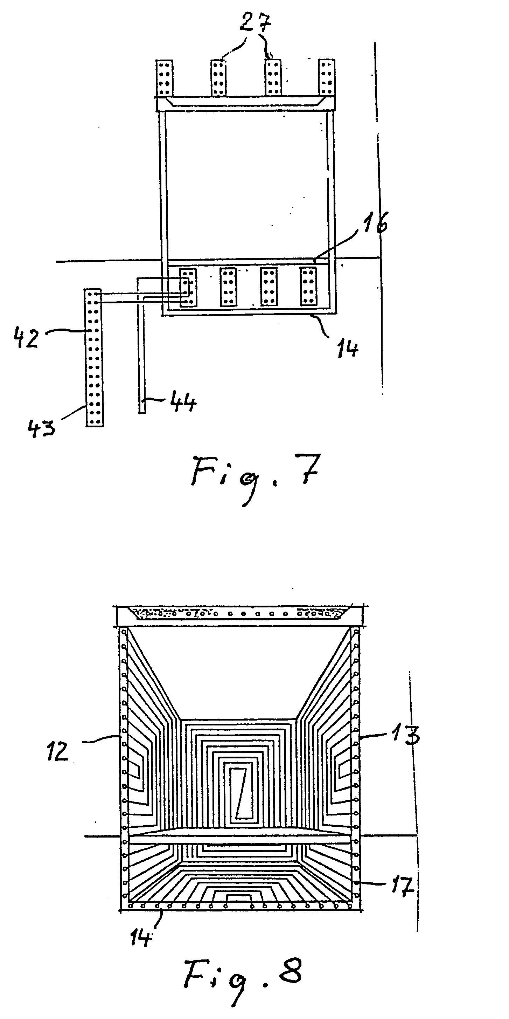

Bei dem Ausführungsbeispiel gemäß Figur 7 ist das Energieabsorbersystem innerhalb der Raumzelle durch ins Erdreich außerhalb der Raumzelle eingebrachte Absorbersysteme ergänzt, die mit den im Raum zwischen der Bodenplatte 14 und der Zwischenbodenplatte 16 befindlichen Speichern bzw. Wärmeaustauschern im Wärmeaustausch stehen: mit Wärmerohren 44 und mit einer in ein Erdloch eingebrachten Rohrschleife 42, die mit Ortbeton 43 ummantelt ist. Der Kreislauf der die Rohre 42 und die Rohrschleife 44 durchströmenden Energieträgerflüssigkeit wird durch eine separat in die Raumzelle eingebaute Pumpe aufrechterhalten.

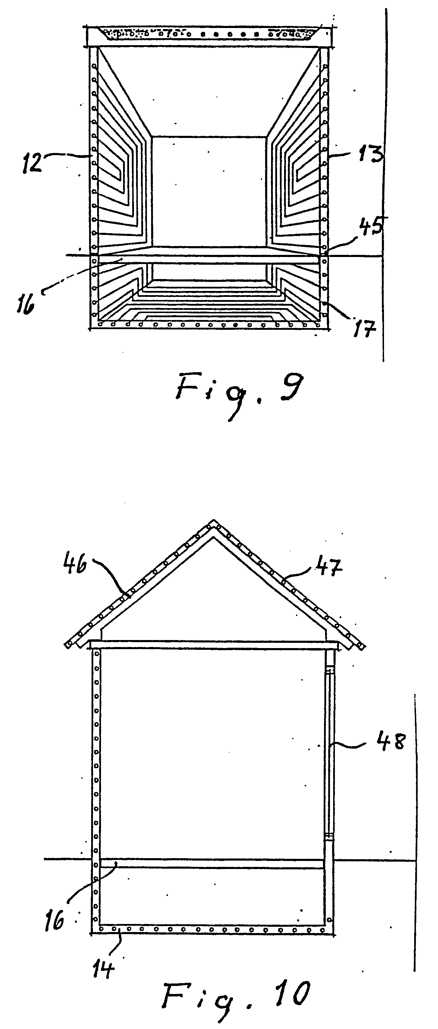

Bei der Raumzelle gemäß Figur 8 bilden die in die Bodenplatte 14 und die Außenwände 12 und 13 einbetonierten Rohre 17 einen gemeinsamen Kreislauf für die Energieträgerflüssigkeit, während bei der Raumzelle gemäß Figur 9 das im Erdreich befindliche, untere Teilstück der Außenwände 12 und 13 mit der Bodenplatte 14 einen monolithischen Baukörper bildet, der von dem aus dem Erdreich ragenden oberen Teilstück der Außenwände durch eine Isolierschicht 45 in Höhe der Zwischenbodenplatte 16 getrennt ist, wobei die Rohre 17 im unteren und oberen Teilstück der Außenwände getrennte Kreisläufe für die Energieträgerflüssigkeit bilden.

Auf die Betonraumzelle gemäß Figur 10 ist ein Satteldach 46 aufgesetzt, in das Absorberleitungen 47 einbetoniert sind, die mit den übrigen Absorberkreisläufen der Raumzelle energetisch verbunden, d.h. an eine gemeinsame Wärmepumpe angeschlossen sind oder mit den Speichern und Wärmeaustauschern im Raum zwischen der Bodenplatte 14 und der Zwischenbodenplatte 16 direkt im Wärmeaustausch stehen. Das Satteldach 46 kann auch als Walmdach ausgeführt sein und eine Ziegeleindeckung aufweisen, die in an sich bekannter Weise als Solardach ausgeführt ist.

Eine der beiden Seitenwände der Raumzelle ist in diesem Ausführungsbeispiel oberhalb der Erdgleiche als Glas- oder Fensterfront 48 ausgeführt. Anstelle dessen kann auch eine lichtdurchlässige Kunststoffwand oder eine Türfront vorgesehen sein.

Für die verschiedenen Wärmedämmschichten und Wärmeisolierungen 24 in den beschriebenen Ausführungsbeispielen kommen insbesondere Polyurethanplatten oder Polystyrolplatten in Frage.

Die transparente Wand 41 im Ausführungsbeispiel gemäß Figur 6 kann aus mehreren Teilen bestehen, die in Profile eingeschoben sind, so daß sie außerhalb der Heizperiode leicht entfernt werden können. Der gleiche Vorteil wird auch erzielt, wenn die transparente Wand 41 als transparenter Rolladen ausgeführt ist.

Die Speicher und Wärmeaustauscher 30 in dem Raum zwischen der Bodenplatte 14 und der Zwischenbodenplatte 16 sowie die Zwischenbodenplatte 16 selbst können sowohl fabrikseitig wie auch nach Aufstellung der Raumzelle 11 vor Ort eingebracht bzw. einbetoniert werden. Als Schalungsmaterial wird dann vorzugsweise Wärmdämm-Material benutzt, das in der Raumzelle verbleibt.

Die in dem Raum zwischen der Bodenplatte 14 und der Zwischenbodenplatte 16 von äußeren Absorbern eingespeicherte Energie wird zweckmäßigerweise durch eine erste Wärmepumpenstufe auf ein Temperaturniveau von 10 bis 30°C gebracht. Die Energieträgerflüssigkeitsrohre 17 im Raum zwischen der Bodenplatte 14 und der Zwischenbodenplatte 16 führen vorzugsweise zu einer zweiten, im zu beheizenden Gebäude befindlichen Wärmepumpe, wobei die Umwälzpumpe für diese Energieträgerflüssigkeit vorzugsweise in dem genannten Raum der Raumzelle 11 untergebracht ist.

**Patentansprüche**

1. Transportable Raumzelle aus Beton-Fertigteilen, insbesondere Garage (11) aus einer vorgefertigten Beton-Raumzelle mit vier Außenwänden (12, 13), einer Bodenplatte (14) und einer vorzugsweise separat aufsetzbaren Dachplatte (15), wobei die Außenwände der Raumzelle als Wärmeenergieabsorber wirkende Rohre (17) für eine Energieträgerflüssigkeit aufweisen, dadurch gekennzeichnet, daß die ins Erdreich eingesetzte Bodenplatte (14) und mindestens eine der Außenwände (12) der Raumzelle (11) auch unterirdisch Absorberrohre (17) für die Energieträgerflüssigkeit aufweisen, daß als Nutzfläche bzw. als Stellfläche für das zu parkende Fahrzeug eine Zwischenbodenplatte (16) in die Raumzelle (11) eingezogen ist und daß der Raum zwischen der Bodenplatte (14) und der Zwischenbodenplatte (16) vorzugsweise als Wärmespeicher (30) und/oder als Wärmeaustauscher nutzbar ist.

2. Raumzelle nach Anspruch 1, dadurch gekennzeichnet, daß elektrische Direktheizungs-Einrichtungen (18) in oder auf den Beton-Fertigteilen, vorzugsweise in oder auf der Bodenplatte (14) angeordnet sind und vorzugsweise mit Nachtstrom betrieben werden und daß die Bodenplatte (14) im Inneren der Raumzelle (11) mit einer Wärmeisolierung (24) versehen ist.

3. Raumzelle nach Anspruch 1 oder 2, dadurch gekennzeichnet, daß auf dem Dach (15) oder den Außenwänden (12, 13) der Raumzelle (11) vorzugsweise doppelseitig mit Absorberrohren (17) belegte Beton-Absorberelemente (27) aufgelagert sind.

4. Raumzelle nach Anspruch 3, dadurch gekennzeichnet, daß die Beton-Absorberelemente (27) über den Grundriß der Raumzelle (11) hinausragen und daß diese Elemente vorzugsweise in Form eines Satteldaches, Kuppeldaches oder dergleichen gestaltet sind.

5. Raumzelle nach einem der vorhergehenden Ansprüche, dadurch gekennzeichnet, daß die Bodenplatte (14) massiver als die Wände, zweckmässigerweise in einer Stärke von 20 cm ausgeführt sind und durch mindestens eine weitere massive Erdspeicherplatte (19), vorzugsweise hinter oder neben der Raumzelle (11) in Höhe der Bodenplatte liegend ergänzt ist, deren Rohrleitungen (17) vorzugsweise als direkte Verlängerung der Rohrleitungen der Bodenplatte ausgeführt sind und/oder über vorzugsweise wasserdichte Durchführungen (20) im unterirdischen Bereich der Raumzellenwand ins Innere geführt sind.

6. Raumzelle nach einem der vorhergehenden Ansprüche, dadurch gekennzeichnet, daß die in die Bodenplatte (14) und die Außenwände (12, 13) einbetonierten Rohre (17) im unterirdischen und oberirdischen Teilstück der Außenwände mindestens einen gemeinsamen Kreislauf für die Energieträgerflüssigkeit bilden.

7. Raumzelle nach einem der vorhergehenden Ansprüche, dadurch gekennzeichnet, daß das unterirdische Teilstück der Außenwände (12, 13) mit der Bodenplatte (14) und das oberirdische Teilstück der Außenwände einen monolithischen Baukörper bilden, daß die Stärke der Außenwände durchgehend 10 cm beträgt, und daß zumindestens das unterirdische Teilstück der Außenwände mit einer verstärkten Armierungsbewehrung ausgeführt ist, die durchgehend in die Bodenplatte geführt ist.

8. Raumzelle nach einem der vorhergehenden Ansprüche, dadurch gekennzeichnet, daß die Fertigteil-Flachdachplatte (15) eine Kiesauflage (37) aufweist, in der sich mindestens ein Absorberkreis befindet, daß sich zwischen der Dachplatte und dem Absorberkreis eine Wärmeisolationsschicht (21) befindet und daß vorzugsweise mindestens ein Absorberkreis der auf der Dachplatte befindlichen Absorber mit den Speichern bzw. Wärmeaustauschern (30) im Raum zwischen Bodenplatte (14) und Zwischenbodenplatte (16) energetisch in Verbindung steht.

9. Raumzelle nach einem der vorgenannten Ansprüche, dadurch gekennzeichnet, daß die Zwischenbodenplatte (16) als Sandwichplatte ausgebildet ist und das unten liegende Fertigteilstück der Sandwichplatte als Energiespeicher oder Wärmeaustauscher mit Rohren (17), durch die eine Energieträgerflüssigkeit strömt, und/oder vorzugsweise mit Nachtstrom betriebenen elektrischen Heizdrähten (38) durchzogen ist.

10. Raumzelle nach einem der vorgenannten Ansprüche, dadurch gekennzeichnet, daß die Zwischenbodenplatte (16) zum Zwecke von Leitungsführungen bzw. zur Wartung und zur Auswechslung der Speicher und Wärmeaustauscher (30) Durchbrüche bzw. Aussparungen aufweist.

11. Raumzelle nach einem der vorgenannten Ansprüche, dadurch gekennzeichnet, daß die Zwischenbodenplatte (16) aus mehreren Teilstücken besteht.

12. Raumzelle nach einem der vorgenannten Ansprüche, dadurch gekennzeichnet, daß die Zwischenbodenplatte (16) geneigt eingebaut ist, so daß die Raumzelle (11) mit eingebauter zweiter Parkbühne als Doppelparkergarage benutzbar ist.

13. Raumzelle nach einem der vorgenannten Ansprüche, dadurch gekennzeichnet, daß der Raum zwischen der Bodenplatte (14) und der Zwischenbodenplatte (16) Flüssigkeits-, Beton-, Keramik-, Schamotte- oder Hybridspeicher und/oder Wärmeaustauscher enthält.

14. Raumzelle nach einem der Ansprüche 1 bis 12, dadurch gekennzeichnet, daß der Raum zwischen der Bodenplatte (14) in der Zwischenbodenplatte (16) mit Erdreich (23), Beton (29), Kies oder anderen wärmeleitenden und wärmespeichernden Materialien gefüllt ist und mit Rohren oder Leitungen (25) zum Wärmetransport, zur Wärmeeinbringung und/oder zum Wärmeaustausch durchzogen ist.

15. Raumzelle nach einem der Ansprüche 1 bis 13, dadurch gekennzeichnet, daß der Raum Beton-Fertigteile (22) als Wärmespeicher und/oder Wärmeaustauscher aufweist, die mit von Energieträgerflüssigkeit durchströmten Rohren (17) und Energie hineintransportierenden Leitungen, wie Kupferdrähten, durchzogen sind, die an Energiespender, insbesondere an mit Nachstrom betriebene elektrische Direktheizungseinrichtungen, Abwärmeleitungen, auf der Dachplatte oder im Erdreich verlegte Absorberleitungen oder andere Energiespender angeschlossen sind, oder daß die Beton-Fertigteile in lastarmen oder umweltenergiearmen Zeiten durch einbetonierte elektrische Heizleitungen unmittelbar aufheizbar sind, oder daß elektrische Speicherheizungen auf Keramik- oder Schamottebasis in den Raum oder die Beton-Fertigteile eingebracht sind und daß die Beton-Fertigteile untereinander und zu den Außenwänden (12, 13), der Bodenplatte (14) und der Zwischenbodenplatte (16) wärmeisoliert sind und in Wärmeaustausch mit einer Wärmepumpe oder der Wärmenutzungsseite der Heizanlage eines zu beheizenden Gebäudes stehen.

16. Raumzelle nach einem der vorgenannten Ansprüche, dadurch gekennzeichnet, daß in das unterirdische Teilstück der Außenwände (12, 13) Durchführungen (20) für die Energieträgerflüssigkeitsrohre (17) und Stromkabel einbetoniert sind, die außerhalb der Raumzelle (11) liegende elektrische Energieerzeuger, Erd-Absorber, Massiv-Absorber (19), Leichtmetall-Absorber, Solar-Absorber bzw. -zellen oder ähnliches mit im Raum zwischen der Bodenplatte (14) und der Zwischenbodenplatte (16) liegenden Speichern und/oder Wärmeaustauschern verbinden.

17. Raumzelle nach einem der Ansprüche 1 bis 6, dadurch gekennzeichnet, daß das unterirdische Teilstück der Außenwände (12, 13) mit der Bodenplatte (14) einen monolithischen Baukörper bildet, der von dem oberirdischen Teilstück der Außenwände vorzugsweise mittels einer Isolierschicht (45) thermisch getrennt ist, und daß die Rohre (17) im unter- und oberirdischen Teilstück getrennte Kreisläufe für die Energieträgerflüssigkeit bilden.

18. Raumzelle nach einem der vorgenannten Ansprüche, dadurch gekennzeichnet, daß bei Anbau der Raumzelle (11) an ein Gebäude die Bodenplatte (14) gebäudeseitig bis zur Ebene der Zwischenbodenplatte (16) eine Wärmeisolierung (26) enthält.

19. Raumzelle nach einem der vorgenannten Ansprüche, dadurch gekennzeichnet, daß bei Anbau der Raumzelle (11) an ein Gebäude zumindest eine der nicht an das Gebäude grenzenden Wände, vorzugsweise eine Längswand, einen dunklen Anstrich (40) erhält und parallel zu dieser Wand in einigen cm Abstand eine transparente Wand (41) installiert ist, so daß wie bei der Trombe-Wand Wärme über die Leitfähigkeit des Wandbetons und ggf. besondere eingebrachte Bewehrungen oder Leitungen in die Bodenplatte (14) einspeicherbar ist.

20. Raumzelle nach Anspruch 19, dadurch gekennzeichnet, daß die transparente Wand (41) mehrteilig ist und in Profile eingeschoben ist bzw. als transparenter Rolladen ausgeführt ist und außerhalb der Heizperiode entfernbar ist.

21. Raumzelle nach einem der vorgenannten Ansprüche, dadurch gekennzeichnet, daß zumindest oberirdisch parallel zu einer der Außenwände isoliert zu dieser eine Absorberplatte (34) an der Außenseite der Außenwand angeordnet ist.

22. Raumzelle nach Anspruch 21, dadurch gekennzeichnet, daß die angestellte Absorberplatte (34) L-förmig ausgebildet ist, und der zweite Schenkel (35) des L etwa in Verlängerung der Bodenplatte (14) der Raumzelle (11) in das umgebende Erdreich eindringt und mit Absorberrohren (17) belegt ist.

23. Raumzelle nach einem der vorgenannten Ansprüche, dadurch gekennzeichnet, daß ins Erdreich eingebrachte Wärmerohre (44) mit den im Raum zwischen der Bodenplatte (14) und der Zwischenbodenplatte (16) befindlichen Speichern bzw. Wärmeaustauschern im Wärmeaustausch stehen.

24. Raumzelle nach einem der vorgenannten Ansprüche, dadurch gekennzeichnet, daß in Abstand von der Raumzelle (11) bis in einige Meter Tiefe eingebrachte Erdlöcher von mindestens je einer Rohrschleife (42) durchzogen sind, die von einer Energieträgerflüssigkeit durchflossen wird und im Wärmeaustausch mit den Speichern und Wärmeaustauschern oder der Wärmepumpe der Heizanlage steht, daß die Erdlöcher mit Ortbeton ausbetoniert sind, so daß die Rohrschleife ummantelt ist und daß der Kreislauf durch mindestens eine separat eingebaute Pumpe aufrecht erhalten wird.

25. Raumzelle nach einem der vorgenannten Ansprüche, dadurch gekennzeichnet, daß die Zwischenbodenplatte (16) auf ihrer Unterseite und/oder die Innenseite der Außenwände (12, 13), vorzugsweise der oberirdischen Teilstücke der Außenwände, und/oder die Unterseite der Dachplatte (15) mit einer Wärmedämmschicht (24), vorzugsweise aus Polystyrol oder Polyurethan, vom Raumzelleninnenraum thermisch isoliert ist.

26. Raumzelle nach einem der vorgenannten Ansprüche, dadurch gekennzeichnet, daß auf die Beton-Raumzelle (11) ein geneigtes Dach (46), insbesondere ein Sattel- oder Walmdach aufgesetzt ist, in das Absorberleitungen (47) einbetoniert sind, bzw. das mit einer Ziegeleindeckung ausgeführt ist, die in an sich bekannter Weise als Solardach ausgeführt ist, und daß die Absorberkreise dieser Dacheindeckung an eine mit den anderen Absorbern gemeinsame Wärmepumpe angeschlossen sind und/oder mit den Speichern bzw. Wärmeaustauschern im Raum zwischen der Bodenplatte (14) und der Zwischenbodenplatte (16) im Wärmeaustausch stehen.

27. Raumzelle nach einem der vorgenannten Ansprüche, dadurch gekennzeichnet, daß der Raum zwischen der Bodenplatte (14) und der Zwischenbodenplatte (16) zumindest die zum Transport der Energieträgerflüssigkeiten erforderlichen Umwälzpumpen (31), sowie Verteiler, an denen die verschiedenen Speicher (30) und Absorber zusammengeführt sind, und je nach Zweckmäßigkeit eine erste Wärmepumpe und zugehörige Steuerungs- und Regelungsinstrumente (32) enthält, und daß die Zwischenbodenplatte um den benötigten Platzbedarf für die Geräte und die Zugänglichkeit gekürzt ist, wobei die freie Fläche vorzugsweise mit abnehmbaren Abdeckungen abgedeckt ist.

28. Raumzelle nach einem der vorgenannten Ansprüche, dadurch gekennzeichnet, daß die in dem Raum zwischen der Bodenplatte (14) und der Zwischenbodenplatte (16) von äußeren Absorbern eingespeicherte Energie mit einer ersten Wärmepumpenstufe auf ein Temperaturniveau von 10°C bis 30°C bringbar ist.

29. Raumzelle nach einem der vorgenannten Ansprüche, dadurch gekennzeichnet, daß Energieträgerflüssigkeitsrohre (17) im Raum zwischen der Bodenplatte (14) und der Zwischenbodenplatte (16) zu einer vorzugsweise zweiten, im zu beheizenden Gebäude befindlichen Wärmepumpe führen, und daß die Umwälzpumpen für diese Energieträgerflüssigkeiten vorzugsweise in dem Raum der Raumzelle untergebracht sind.

30. Raumzelle nach einem der vorgenannten Ansprüche, dadurch gekennzeichnet, daß oberhalb der Erdgleiche mindestens eine der Betonlängs- und/oder Querwände durch ein anderes Material, wie Glas, Kunststoff, Fensterfronten oder Türfronten (48), ersetzt ist.

## Claims

1. Transportable module made of precast concrete parts, particularly a garage (11) made of a prefabricated concrete module with four outer walls (12, 13), a floor slab (14) and preferably a separately detachable roofing slab (15), with the outer walls of the module containing pipes (17) acting as thermal energy absorbers for an energy carrier liquid, characterized in that the floor slab (14) set into the earth and at least one of the outer walls (12) of the module (11) also contain underground absorber pipes (17) for the energy carrier liquid, that an intermediate floor slab (16) is built into the module (11) as a usable area or as a parking space for the vehicle to be parked, and that the space between the floor slab (14) and the intermediate floor slab (16) can preferably be used as a heat accumulator (30) and/or as a heat exchanger.

2. Module according to claim 1, wherein electrical direct heating devices (18) are arranged in or upon the precast concrete parts, preferably in or upon the floor slab (14) and are preferably operated by night current, and wherein the floor slab (14) within the interior of the module (11) is provided with a heat insulation.

3. Module according to claim 1 or 2, wherein concrete absorber elements (27), preferably with absorber pipes (17) laid on both sides, are resting on the roofing (15) or on the outer walls of the module.

4. Module according to claim 3, wherein the concrete absorber elements (27) are projecting beyond the horizontal projection of the module (11) and wherein these elements are preferably built in the form of a double pitch roof, a cupola roof or the like.

5. Module according to one of the previous claims, wherein the floor slab (14) is properly constructed to be more solid than the walls with a thickness of 20 cm and is completed by at least one further solid earth accumulation slab (19) preferably lying behind or beside the module (11) on the level of the floor slab, the pipe lines (17) of which are preferably constructed as a direct prolongation of the pipe lines of the floor slab and/or are led into the interior over preferably waterproof ducts (20) in the underground area of the module wall.

6. Module according to one of the previous claims, wherein the pipes (17), embedded in the concrete of the floor slab (14) and of the outer walls (12, 13), form at least one common circuit for the energy carrier liquid in the underground and overground portion of the outer walls.

7. Module according to one of the previous claims, wherein the underground portion of the outer walls (12, 13) with the floor slab (14) and the overground portion of the outer walls are forming a monolithic solidium, wherein the thickness of the outer walls amounts to 10 cm throughout, and wherein at least the underground portion of the outer walls is provided with a reinforced armouring reinforcement which is totally introduced into the floor slab.

8. Module according to one of the previous claims, wherein the prefabricated flat roof slab (15) contains a gravel layer (37) with at least one absorber circuit, wherein a heat insulation layer (21) is inserted between the roofing slab and the absorber circuit, and wherein preferably at least one absorber circuit of the absorbers located on the roofing slab is energetically in contact with the accumulators or heat exchangers (30) in the space between the floor slab (14) and the intermediate floor slab (16).

9. Module according to one of the previous claims, wherein the intermediate floor slab (16) is constructed as a sandwich slab and the prefabricated portion of the sandwich slab, which lies below, as an energy accumulator or as a heat exchanger with pipes (17) through which an energy carrier liquid is flowing, and/or is preferably provided with resistance wires (38) in the interior, which are operated by night current.

10. Module according to one of the previous claims, wherein the intermediate floor slab (16) contains openings or recesses for the purpose of arranging the lines or for maintenance purposes and for the change of accumulators and heat exchangers (30).

11. Module according to one of the previous claims, wherein the intermediate floor slab (16) consists of several sections.

12. Module according to one of the previous claims, wherein the intermediate floor slab (16) is built in in an inclined way, so that the module (11) with a built-in second parking platform can be used as a double parking garage.

13. Module according to one of the previous claims, wherein the space between the floor slab (14) and the intermediate floor slab (16) contains liquid, concrete, ceramic, chamotte, or hybrid accumulators and/or heat exchangers.

14. Module according to one of the claims 1 to 12, wherein the space between the floor slab (14) and the intermediate floor slab (16) is filled with earth (23), concrete (29), gravel, or other heat conducting and heat accumulating materials and is provided with pipes or lines (25) for heat transport, heat supply and/or for heat exchanging purposes.

15. Module according to one of the claims 1 to 13, wherein the space contains precast concrete parts (22) as heat accumulators and/or heat exchangers, which are provided with pipes (17) in the interior, with an energy carrier liquid flowing through these pipes, as well as with lines transporting energy into the inside, such as copper wire connected to energy suppliers, particularly to electrical direct heating devices operated by night current, waste heat lines, absorber lines laid upon the roofing slab or within the ground, or to other energy suppliers, or wherein the precast concrete parts are directly heatable in times of low load and of low environmental energy, or wherein electrical night-storage heating installations on a ceramic or chamotte basis are built into the space or into the precast concrete parts, and wherein the precast concrete parts are heat-insulated from one another and from the outer walls (12, 13) of the floor slab (14) and of the intermediate floor slab (16) and are in a heat exchanging relationship with a heat pump or with the heat-using part of the heating installation of a building to be heated.

16. Module according to one of the previous claims, wherein ducts (20) for the energy-carrier-liquid pipes (17) and for the electric cables are embedded in the concrete of the underground portion of the outer walls (12, 13), with these ducts connecting electrical energy generators lying outside the module (11) as well as earth absorbers, solid absorbers, light metal absorbers, solar absorbers or solar cells or the like with accumulators and/or heat exchangers lying in the space between the floor slab (14) and the intermediate floor slab (16).

17. Module according to one of the claims 1 to 6, wherein the underground portion of the outer walls (12, 13) forms a monolitic solidium with the floor slab (14), the monolitic solidium being thermally separated from the overground portion of the outer walls, preferably by means of an insulating layer (45), and wherein the pipes (17) are forming separate circuits for the energy carrier liquid in the underground and overground portion.

18. Module according to one of the previous claims, wherein in the case of the module (11) being built against a building, the floor slab (14) contains a heat insulation (26) on the side adjacent to the building up to the level of the intermediate floor slab (16).

19. Module according to one of the previous claims, wherein in the case of the module (11) being built against a building, at least one of the walls not adjacent to the building, preferably a longitudinal wall, is provided with a dark coat of paint (40), and parallel to this wall at a distance of a few cm there is a transparent wall (41) installed, so that, as in the case of the Trombe wall, heat can be accumulated in the floor slab (14) via the conducting capacity of the wall concrete and, if necessary, via special built-in reinforcements or lines.

20. Module according to claim 19, wherein the transparent wall (41) consists of several parts and is inserted into profiles or is constructed as a transparent roller shutter and is removable when the heating period is over.

21. Module according to one of the previous claims, wherein an absorber plate (34) is arranged at the surface of the outer wall at least overground, parallel to one of the outer walls and insulated from this wall.

22. Module according to claim 21, wherein the absorber plate (34), which is arranged at the surface of the outer wall, is L-shaped and the second leg (35) of the L penetrates into the surrounding earth approximately in prolongation of the floor slab (14) of the module (11) and is provided with absorber pipes (17) in the interior.

23. Module according to one of the previous claims, wherein heating pipes (44), placed into the earth, are in a heat exchanging relationship with the accumulators or heat exchangers contained in the space between the floor slab (14) and the intermediate floor slab (16).

24. Module according to one of the previous claims, wherein earth holes, placed at a distance from the module (11) down to a depth of several meters, are provided with at least one pipe loop (42) each in the interior, with an energy carrier liquid flowing through the pipe loop and the pipe loop being in a heat exchanging relationship with the accumulators and heat exchangers or with the heat pump of the heating installations, wherein the earth holes are filled with mix-in-situ concrete, so that the pipe loop is cased and the circuit is maintained by at least one pump built in separately.

25. Module according to one of the previous claims, wherein the intermediate floor slab (16) at its underside, and/or the inside of the outer walls (12, 13), preferably of the overground portions of the outer walls, and/or the underside of the roofing slab (15), is thermally insulated from the interior space of the module with a thermal insulation layer (24), preferably of polystyrene or polyurethane.

26. Module according to one of the previous claims, wherein an inclined roof (46) is placed upon the concrete module (11), particularly a double pitch roof or a corner roof, in which absorber lines (47) are embedded in concrete or which is constructed with a brick roofing, the construction method of which will be known as such, and wherein the absorber circuits of this roofing are connected with a heat pump which is also common to the other absorbers and/or are in a heat exchanging relationship with the accumulators or heat exchangers in the space between the floor slab (14) and the intermediate floor slab (16).

27. Module according to one of the previous claims, wherein the space between the floor slab (14) and the intermediate floor slab (16) contains at least the circulation pumps (31) necessary for the transport of the energy carrier liquid, as well as distribution at which the different accumulators (30) and absorbers are brought together, as well as, depending on usefulness, a first heat pump and associated control instruments (32), and wherein the intermediate floor slab is shortened by the floor space required for the instruments and for accessibility purposes, with the open space preferably being covered with removable covers.

28. Module according to one of the previous claims, wherein the energy accumulated in the space between the floor slab (14) and the intermediate floor slab (16) by external absorbers can be brought to a temperature level of from 10°C to 30°C by means of the first heat pump stage.

29. Module according to one of the previous claims, wherein the energy-carrier-liquid pipes (17) in the space between the floor slab (14) and the intermediate floor slab (16) are leading to a preferably second heat pump in the building to be heated, and wherein the circulation pumps for these energy carrier liquids are preferably accommodated in the space of the module.

30. Module according to one of the previous claims, wherein above the ground level at least one of the longitudinal concrete walls and/or of the cross concrete walls is replaced by a different material such as glass, synthetic material, window fronts, door fronts (48).

## Revendications

1. Cellule transportable d'éléments préfabriqués en béton, notamment garage (11) d'une cellule préfabriquée en béton avec quatre parois extérieures (12, 13), une plaque de fond (14) et une plaque de toiture (15) qui est de préférence démontable séparément, les parois extérieures de la cellule étant pourvues de tuyaux (17) qui servent d'absorbeur d'énergie calorifique pour un liquide porteur d'énergie, caractérisée en ce que la plaque de fond (14) mise dans la terre et au moins une des parois extérieures (12) de la cellule (11) possèdent aussi sous terre des tuyaux d'absorbeur (17) pour le liquide porteur d'énergie, que une plaque de fond intermédiaire (16) est interposée dans la cellule (11) comme surface utile ou bien comme emplacement pour le véhicule à garer et que l'espace entre la plaque de fond (14) et la plaque de fond intermédiaire (16) est de préférence utilisable comme accumulateur thermique (30) et/ou comme échangeur thermique.

2. Cellule selon la revendication 1 caractérisée en ce qu'il y a des installations électriques de chauffage direct (18) dans ou sur les éléments préfabriqués en béton, de préférence dans ou sur la plaque de fond (14) et qu'elles sont actionnées de préférence par du courant de nuit et que la plaque de fond (14) est pourvue à l'intérieur de la cellule (11) d'une isolation thermique (24).

3. Cellule selon la revendication 1 ou 2 caractérisée en ce que sur le toit (15) ou les parois extérieures (12, 13) de la cellule (11) sont mis des éléments absorbeurs en béton (27) qui portent de préférence des deux côtés des tuyaux absorbeurs (17).

4. Cellule selon la revendication 3 caractérisée en ce que les éléments absorbeurs en béton (27) débordent le plan de la cellule (11) et que ces éléments ont de préférence la forme d'un toit en batière, toit en coupole ou une chose semblable.

5. Cellule selon une des revendications précédentes caractérisée en ce que la plaque de fond (14) est plus massive que les parois, qu'elle a de manière appropriée une épaisseur de 20 cm et qu'elle est complétée par au moins une autre plaque accumulateur souterraine massive (19) qui se trouve de préférence derrière ou à côté de la cellule (11) à l'hauteur de la plaque de fond, dont les conduits de tuyaux (17) sont faits de préférence comme allonge directe des conduits de tuyaux de la plaque de fond et/ou sont menés à l'intérieur par des passages (20) qui sont de préférence étanches à l'eau et qui se trouvent dans la partie souterraine du paroi de la cellule.

6. Cellule selon une des revendications précédentes caractérisée en ce que les tuyaux (17) bétonnés dans la plaque de fond (14) et les parois extérieures (12, 13) forment au moins une circulation commune dans la partie souterraine et aérienne des parois extérieures destinée au liquide porteur d'énergie.

7. Cellule selon une des revendications précédentes caractérisée en ce que la partie souterraine des parois extérieures (12, 13) avec la plaque de fond (14) et la partie aérienne des parois extérieures forment un corps monolithique, que l'épaisseur des parois extérieures se monte de manière continue à 10 cm et que au moins la partie souterraine des parois extérieures possède une armature renforcée qui est insérée de manière continue dans la plaque de fond.

8. Cellule selon une des revendications précédentes caractérisée en ce que la plaque de toit plat préfabriquée (15) est pourvue d'une couche de gravier (37) dans laquelle se trouve au moins un circuit absorbeur, qu'il y a de préférence un raccord énergétique entre au moins un circuit absorbeur des absorbeurs se trouvant sur la plaque de toit et les accumulateurs ou bien les échangeurs thermiques (30) qui se trouve dans l'espace entre la plaque de fond (14) et la plaque de fond intermédiaire (16).

9. Cellule selon une des revendications précédentes caractérisée en ce que la plaque de fond intermédiaire (16) est formée comme panneau sandwich et que la partie préfabriquée du panneau sandwich qui se trouve en bas est munie — en tant qu'accumulateur ou échangeur thermique — de tuyaux (17) par lesquels passe un liquide porteur d'énergie et/ou de fils de chauffe éléctriques (38) qui fonctionnent de préférence par du courant de nuit.

10. Cellule selon une des revendications précédentes caractérisée en ce que la plaque de fond intermédiaire (16) possède des percements ou bien des rainures pour des câblages ou bien pour l'entretien et l'échange des accumulateurs et échangeurs thermiques (30).

11. Cellule selon une des revendications précédentes caractérisée en ce que la plaque de fond intermédiaire (16) se compose de plusieurs parties.

12. Cellule selon une des revendications précédentes caractérisée en ce que la plaque de fond intermédiaire (16) est installée de manière inclinée, de manière que la cellule (11) est utilisable, avec une deuxième tribune de stationnement intégrée, comme garage double.

13. Cellule selon une des revendications précédentes caractérisée en ce que l'espace entre la plaque de fond (14) et la plaque de fond intermédiaire (16) contient des accumulateurs de liquide, de béton, de céramique, de chamotte ou hybride et/ou des échangeurs thermiques.

14. Cellule selon une des revendications précédentes caractérisée en ce que l'espace entre la plaque de fond (14) et la plaque de fond intermédiaire (16) est remplie de terre (23), béton (29), gravier ou d'autres matériels conducteurs et accumulateurs de chaleur et est traversé par des tuyaux ou des conduits (25) destinés au transport de chaleur, l'introduction de chaleur et/ou à l'échange de chaleur.

15. Cellule selon une des revendications 1 à 13 caractérisée en ce que l'espace possède des éléments préfabriquées en béton (22) comme accumulateur de chaleur et/ou échangeur de chaleur qui sont traversés par des tuyaux (17) par lesquels passe le liquide porteur d'énergie et par des conduits comme p.ex. des fils de cuivre par lesquels vient introduite l'énergie qui sont raccordés à des sources énergétiques notamment à des installations de chauffage direct qui fonctionnent par du courant de nuit, à des conduits de chaleur perdue, des conduits absorbeurs installés sur la plaque de toit ou dans la terre ou à des autres sources énergétiques ou que les éléments préfabriqués en béton sont à chauffer dans un temps pauvre en charge et pauvre en énergie d'environnement directement par des conduits de chauffage électriques bétonnées, ou que des chauffages électriques par accumulation sur la base de céramique ou chamotte sont insérés dans l'espace ou les éléments préfabriqués en béton et que les éléments préfabriqués en béton sont isolés à la chaleur mutuellement et par rapport aux parois extérieures (12, 13) à la plaque de fond (14) et à la plaque de fond intermédiaire (16) et qu'il y a un échange de chaleur entre eux et une pompe de chaleur ou le côté utilisation de chaleur de l'installation de chauffage d'un bâtiment à chauffer.

16. Cellule selon une des revendications précédentes caractérisée en ce que dans la partie souterraine des parois extérieures (12, 13) sont bétonnés des passages (20) pour les tuyaux du liquide porteur d'énergie (17) et les câbles pour courant qui raccordent des installations pour la production d'énergie éléctrique, des absorbeurs ou des cellules de terre, massifs (19), en métal léger, solaires ou une chose semblable qui se trouvent à l'extérieur de la cellule (11) avec des accumulateurs et/ou échangeurs thermiques qui se trouvent dans l'espace entre la plaque de fond (14) et la plaque de fond intermédiaire (16).

17. Cellule selon une des revendications 1 à 6 caractérisée en ce que la partie souterraine des parois extérieures (12, 13) forme un corps monolithique avec la plaque de fond (14) lequel est séparé thermiquement de la partie aérienne des parois de préférance moyennant une couche isolante (45) et que les tuyaux (17) forment des circulations séparées pour le liquide porteur d'énergie dans la partie souterraine et dans la partie aérienne.

18. Cellule selon une des revendications précédentes caractérisée en ce que lors de l'annexe de la cellule (11) à un bâtiment la plaque de fond (14) contient une isolation thermique (26) sur le côté vers le bâtiment jusqu'au niveau de la plaque de fond intermédiaire (16).

19. Cellule selon une des revendications précédentes caractérisée en ce que lors de l'annexe de la cellule (11) à un bâtiment au moins une des parois non-avoisinant le bâtiment, de préférance une paroi longitudinale, reçoit une couche de peinture foncée (40) et que parallèlement à cette paroi à une distance de quelques cm est installée une paroi transparente (41) de manière que — comme c'est le cas pour la paroi Trombe — de la chaleur peut être accumulée dans la plaque de fond (14) moyennant la conductibilité du béton de paroi et, le cas échéant, des armatures ou conduits installés spéciaux.

20. Cellule selon la revendication 19 caractérisée en ce que la paroi transparente (41) se compose de plusieurs parties et est introduite dans des profilés ou bien faite comme un volet roulant transparent et qu'il peut être enlevé au dehors de la période de chauffage.

21. Cellule selon une des revendications précédentes caractérisée en ce qu'il se trouve au côté extérieur de la paroi extérieure une plaque absorbeur (34) au moins au-dessus du sol parallèlement à une des parois extérieures et isolée contre celle-ci.

22. Cellule selon la revendication 21 caractérisée en ce que la plaque absorbeur installée (34) a la forme d'un L et que environ à la rallonge de la plaque de fond (14) de la cellule (11) la deuxième branche (35) du L entre dans le sol ambiant et qu'elle est couverte de tuyaux absorbeurs (17).

23. Cellule selon une des revendications précédentes caractérisée en ce qu'il y a une échange de chaleur entre des tubes échangeurs de chaleur (44) mis dans le sol et les accumulateurs ou bien échangeurs thermiques se trouvant dans l'espace entre la plaque de fond (14) et la plaque de fond intermédiaire (16).

24. Cellule selon une des revendications précédentes caractérisée en ce qu'il sont prévus des trous dans le sol se trouvant à distance de la cellule (11) qui ont quelques mètres de profondeur et dont chacun est passé par au moins un serpentin (42) par lequel coule un liquide porteur d'énergie et qui a un échange de chaleur avec les accumulateurs et les échangeurs thermiques ou avec la pompe de chaleur de l'installation de chauffage que les trous dans le sol sont bétonnés avec du béton coulé sur place de manière que le serpentin est enrobé et que la circulation est maintenue par au moins une pompe installée séparément.

25. Cellule selon une des revendications précédentes caractérisée en ce que la plaque de fond intermédiaire (16) est isolée thermiquement sur sa face inférieure et/ou le côté intérieur des parois extérieures (12, 13) de préférence des parties aériennes des parois extérieures et/ou la face inférieure de la plaque de toiture (15) contre l'intérieur de la cellule moyennant une couche calorifuge (24), de préférance en polystyrol ou polyuréthane.

26. Cellule selon une des revendications précédentes caractérisée en ce que la cellule en béton (11) porte un toit incliné (46) notamment un toit en batière ou un toit en croupe dans lequel sont bétonnés des conduits absorbeurs (47) ou bien qui possède une couverture en tuile qui est faite comme toit solaire connu en soi et que les circuits absorbeurs de cette couverture sont raccordés à la même pompe de chaleur que les autres absorbeurs et/ou font un échange de chaleur avec les accumulateurs ou bien échangeurs thermiques dans l'espace entre la plaque de fond (14) et la plaque de fond intermédiaire (16).

27. Cellule selon une des revendications précédentes caractérisée en ce que l'espace entre la plaque de fond (14) et la plaque de fond intermédiaire (16) contient au moins les pompes de circulations (31) nécessaires au transport des liquides porteurs d'énergie ainsi que des distributeurs auxquels se rencontrent les différents accumulateurs (30) et absorbeurs et selon l'opportunité une première pompe de chaleur et des instruments de commande et de réglage respectifs (32) et que la plaque de fond intermédiaire est raccourcie selon l'encombrement nécessaire aux outils et l'accessibilité, la surface libre étant couverte de préférance par des couvertures démontables.

28. Cellule selon une des revendications précédentes caractérisée en ce que l'énergie mise dans l'espace entre la plaque de fond (14) et la plaque de fond intermédiaire (16) moyennant des absorbeurs extérieurs peut être porté par un premier gradin de pompe de chaleur à un niveau de température de 10°C à 30°C.

29. Cellule selon une des revendications précédentes caractérisée en ce que des tuyaux porteurs d'énergie (17) dans l'espace entre la plaque de fond (14) et la plaque de fond intermédiaire (16) mènent de préférance à une deuxième pompe de chaleur se trouvant dans le bâtiment à chauffer et que les pompes de circulations pour ces liquides porteurs d'énergie sont installées de préférance dans le local de la cellule.

30. Cellule selon une des revendications précédentes caractérisée en ce que au-dessus du niveau du sol au moins une des parois en béton longitudinales et/ou transversales est substitué par un autre matériel comme du verre, de la matière synthétique, des façades de vitre ou de portes (48).

Fig.1

Fig.2

Fig.3

Fig.4

Fig. 5

Fig. 6

EP 0 209 833 B1

Fig. 7

Fig. 8

17

Fig. 9

Fig. 10